(19) Europäisches Patentamt
European Patent Office
Office européen des brevets

(11) Veröffentlichungsnummer: **0 018 589**
**B1**

# (12) EUROPÄISCHE PATENTSCHRIFT

(45) Veröffentlichungstag der Patentschrift: **15.06.83**

(51) Int. Cl.³: **C 09 B 57/04,** C 09 B 57/10, C 07 D 417/04

(21) Anmeldenummer: **80102186.6**

(22) Anmeldetag: **23.04.80**

## (54) Verfahren zur Herstellung von unlöslichen Metallkomplexfarbstoffen.

(30) Priorität: **25.04.79 DE 2916697**

(43) Veröffentlichungstag der Anmeldung: **12.11.80 Patentblatt 80/23**

(45) Bekanntmachung des Hinweises auf die Patenterteilung: **15.06.83 Patentblatt 83/24**

(84) Benannte Vertragsstaaten: **CH DE GB LI**

(56) Entgegenhaltungen:
**CH-A-606 335**
**DE-A-2 535 578**

(73) Patentinhaber: **BASF Aktiengesellschaft, Carl-Bosch-Strasse 38, D-6700 Ludwigshafen (DE)**

(72) Erfinder: **Radtke, Volker, Dr., Barbarossastrasse 4, D-6733 Hassloch (DE)**

**EP 0 018 589 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zur Herstellung von unlöslichen Metallkomplexfarbstoffen

In der DE-A-2 357 830 werden Metallkomplexfarbstoffe der allgemeinen Formel (I)

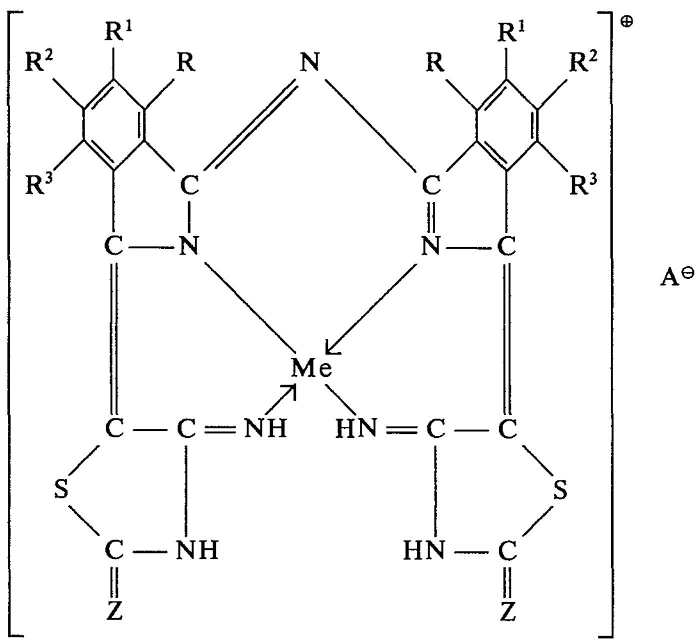

(I)

und deren Herstellung beschrieben. In der Formel (I) bedeuten

R, $R^1$, $R^2$ und $R^3$, die gleich oder verschieden sein können, Wasserstoff, $C_1$- bis $C_4$-Alkyl, $C_1$- bis $C_4$-Alkoxy, Chlor, Brom, Trifluormethyl oder Phenyl
Me ein Kupfer-, Kobalt- oder vorzugsweise ein Nickelatom
Z =NH, =S oder =O und
$A^\ominus$ ein Äquivalent eines Anions.

Von den Farbstoffen der Formel (I) sind solche bevorzugt, in denen R, $R^1$, $R^2$ und $R^3$ Wasserstoff sind. Besonders bevorzugt sind Farbstoffe (I), in denen R, $R^1$, $R^2$ und $R^3$ Wasserstoff, Me Nickel und Z >NH oder >O bedeuten, von denen die Farbstoffe mit Z= >NH ganz besonders bevorzugt sind.

Als Anionen $A^\ominus$ kommen vor allem einwertige, farblose anorganische und organische in Betracht. Da das Anion $A^\ominus$ auf die Eigenschaften des Metallkomplexes keinen Einfluß hat, ist man in der Wahl weitgehend frei. $A^\ominus$ wird in der Regel das gleiche sein, wie es in den zur Herstellung des Metallkomplexes verwendeten Nickel-, Kobalt- oder Kupfersalzen vorhanden war. Für $A^\ominus$ sind z. B. im einzelnen zu nennen: Bromid, Chlorid, Jodid, Nitrat, Acetat, Benzolsulfonat und p-Toluolsulfonat. Von diesen sind Bromid und Chlorid bevorzugt, da die entsprechenden Metallsalze leicht in reiner Form und zu niedrigen Kosten zugänglich sind.

Im allgemeinen werden die Metallkomplexe der Formel (I) durch Einwirkung von etwa 2 Moläquivalent eines geeigneten 1-Imino-3-(4'-imino-5'-thiazoldinyliden)-isoindolins der Formel (II) auf 1 Moläquivalent eines Metallsalzes $MeA_2$, wobei Z, Me und A die vorstehend angegebene Bedeutung haben, erhalten:

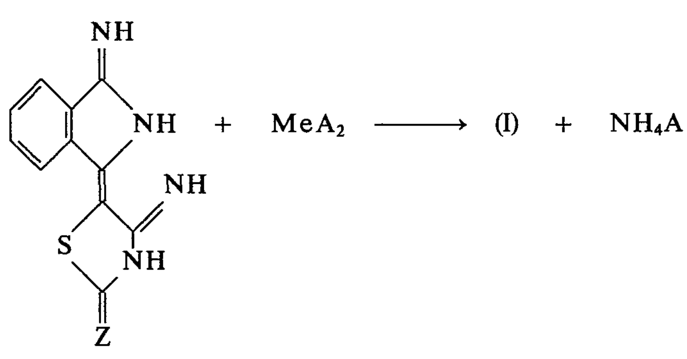

(II)

Die Reaktion kann in stark polaren aprotischen Lösungsmitteln wie Dimethylformamid, Dimethylsulfoxid, N-Methylpyrrolidon und Hexamethylphosphorsäuretriamid oder in protischen Lösungsmitteln wie Wasser, niedrigen aliphatischen Alkoholen wie Methanol, Äthanol, Isopropanol und Glykoläther wie 2-Äthoxyäthanol durchgeführt werden.

Die 1-Imino-3-(4′-imino-5′-thiazolidinyliden)-isoindoline der Formel (II) werden in bekannter Weise durch Umsetzen von 1,3-Diimino-isoindolin und 4-Iminothiazolidinderivaten (1 : 1 Mol)

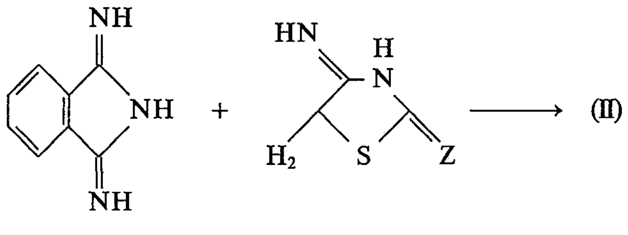

(IIa) (IIb)

erhalten, wobei Z die vorstehend angegebene Bedeutung hat (DE-A-2 357 830, S. 17, Abs. 2).

Im Beispiel 2 der DE-A-2 357 830 wird ein Eintopf-Verfahren zur Herstellung des Farbstoffes der Formel (I) mit $R = R^1 = R^2 = R^3 = H$, $Z = NH$, $Me = Ni$ und $A = Cl^{\ominus}$ beschrieben, bei dem 1,3-Diiminoisoindolin, Nickelchlorid und 2,4-Diiminothiazolidin-benzolsulfonat in Dimethylformamid ohne Zwischenisolierung von Zwischenprodukten miteinander umgesetzt werden. Die nach diesem Verfahen erhaltenen Farbstoffe sind sehr schlecht kristallisiert und nicht rein. Da sich die eingeschlossenen und anhaftenden Verunreinigungen auch nicht mit großen Mengen an Lösungsmitteln auswaschen lassen, sind die so hergestellten Produkte für die Pigmentierung von Lacken und Kunststoffen nicht geeignet.

In der DE-A-2 357 830 ist ein zweites Verfahren zur Herstellung von (I) angegeben, bei dem man zuerst in stark polaren aprotischen Lösungsmitteln wie Dimethylformamid eine geeignete Verbindung der Formel II mit einem Zinkhalogenid zu einem Zinkhalogenid-Addukt III umsetzt, dieses isoliert und dann dieses Addukt in einer weiteren Stufe in stark polaren aprotischen Lösungsmitteln wie Dimethylformamid, Dimethylsulfoxid oder Hexamethylphosphorsäuretriamid mit einem Metallsalz $MeA_2$ zu Verbindungen der Formel I reagieren läßt.

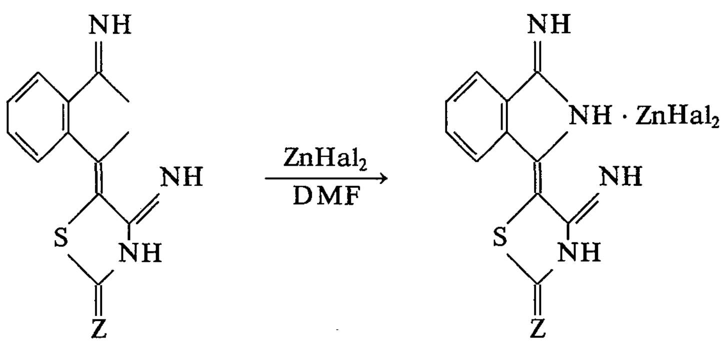


(II) (III)

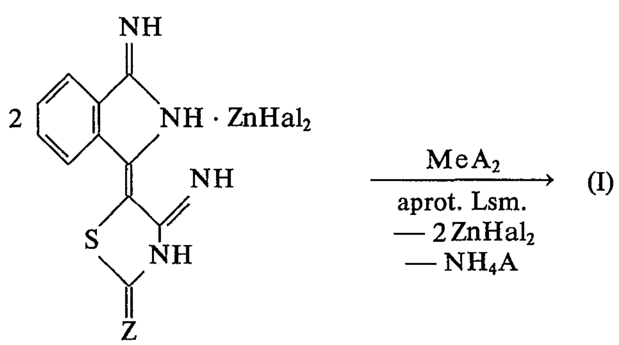


(III)

Die nach diesem Verfahren hergestellten Farbstoffe sind gut kristallisiert, analysenrein und können ohne weitere Reinigungs- und Formierungsoperationen zur Pigmentierung von Lacken und Kunststoffen verwendet werden. Da zu ihrer Herstellung aber große Mengen an teuren Lösungsmitteln

benötigt werden und diese Lösungsmittel aus ökologischen und wirtschaftlichen Gründen wieder aufgearbeitet werden müssen, sind die Farbstoffe der Formel I zu wirtschaftlich vertretbaren Kosten praktisch nicht herzustellen.

Aufgabe der vorliegenden Erfindung war es, ein Verfahren zu entwickeln, nach dem sich auf weniger aufwendige und kostspielige Weise Verbindungen der Formel (I) sicher und in einer für Pigmentzwecke geeigneten Form herstellen lassen.

Es wurde nun gefunden, daß man auch dann reine und koloristisch wertvolle Farbstoffe der Formel (I), worin R, $R^1$, $R^2$, $R^3$, Me, Z und A die vorstehend angegebene Bedeutung haben, durch Kondensation von entsprechenden 1,3-Diiminoisoindolinen und Thiazolidinderivaten in protischen Lösungsmitteln und Einwirken von Metallsalzen $MeA_2$ in Lösungsmitteln erhält, wenn man die Kondensation des Diiminoisoindolins (IIa) mit einem Salz des Thiazolidins (IIb) in Wasser, gegebenenfalls in Gegenwart von basisch wirkenden Verbindungen durchführt, das 1 : 1 Kondensationsprodukt der Formel (II) isoliert und auf das Kondensationsprodukt in aprotischen polaren, mit Wasser mischbaren Lösungsmitteln Metallsalze $MeA_2$ einwirken läßt und das Umsetzungsprodukt isoliert.

Das heißt, beim Verfahren der vorliegenden Erfindung wird auf die Bildung und Zwischenisolierung der Zinkhalogenid-Additionsverbindungen (III) verzichtet und das 1 : 1 Kondensationsprodukt der Formel (II) direkt mit Metallhalogeniden $MeA_2$ in aprotischen Lösungsmitteln umgesetzt. Die auf diese Weise in einem zweistufigen Verfahren hergestellten Farbstoffe der Formel (I) stimmen in ihren koloristischen Eigenschaften praktisch mit den Pigmenten überein, die über die Additionsverbindungen (III) in einem dreistufigen Verfahren erhalten werden. Die Bildung und Isolierung der Additionsverbindungen (III) stellt im Endeffekt nur eine Reinigung der 1-Imino-3-(4′-imino-5′-thiazolidinyliden)-isoindoline der Formel (II) dar, da die Metallkomplexe der Formel (I) sich auch in Abwesenheit von Zinkhalogeniden aus den Isoindolinen (II) und Metallsalzen $MeA_2$ bilden. Die Verbindungen der Formel (III) werden nach den Angaben der DE-A-2 357 830 in aprotischen Lösungsmitteln wie Dimethylformamid hergestellt. Die eingesetzten Lösungsmittel müssen wieder aufgearbeitet werden. Daher stellt das neue Verfahren, das ohne die Stufe der Additionsverbindungen (III) auskommt, einen erheblichen wirtschaftlichen und ökologischen Vorteil dar.

Das erfindungsgemäße Verfahren wird in der Weise durchgeführt, daß man in der ersten Stufe ein geeignetes 1,3-Diiminoisoindolin mit einem entsprechenden 4-Iminothiazolidin in etwa äquimolaren Mengen miteinander reagieren läßt. Die Thiazolidinderivate werden dabei im allgemeinen in Form ihrer Salze, etwa des Hydrochlorids oder des Benzolsulfonats eingesetzt, da die freien Basen nicht stabil sind. Aus diesen Salzen kann man die freien Thiazolidine durch stöchiometrische Mengen einer Hilfsbase wie verd. Ammoniaklösung, Natriumbicarbonat, Soda oder verdünnte Natronlauge vor Zugabe des Diiminoisoindolins in situ herstellen; die Kondensation gelingt aber auch ohne Zugabe der Hilfsbase, da die Umsetzung unter Abspaltung von 1 Mol Ammoniak verläuft. Als Lösungsmittel können außer aliphatischen Alkoholen mit 1 bis 4 C-Atomen und Wasser auch aprotische Lösungsmittel wie Dimethylformamid und N-Methylpyrrolidon verwendet werden; die Verwendung von Wasser als Lösungsmittel ist dabei bevorzugt. Im allgemeinen arbeitet man bei Temperaturen zwischen 0 und 100° C, vorzugsweise zwischen 20 und 80° C.

Die Umsetzung der so erhaltenen 1 : 1 Kondensationsprodukte (II) zu den Pigmentfarbstoffen (I) erfolgt zweckmäßigerweise in aprotischen Lösungsmitteln wie Dimethylformamid, N-Methylpyrrolidon, Dimethylsulfoxid, Hexamethylphosphorsäuretriamid und Dimethylacetamid. Da diese Lösungsmittel mit Wasser mischbar sind, können die Kondensationsprodukte (II) nicht nur in getrockneter, wasserfreier Form, sondern auch als wäßriger Preßkuchen eingesetzt werden. In diesem Fall kann es vorteilhaft sein, während der Farbstoffbildung das mit dem Preßgut eingeschleppte Wasser zusammen mit einem Teil des gewählten Lösungsmittels abzudestillieren.

Im allgemeinen erfolgt die Umsetzung von (II) mit dem Metallsalz $MeA_2$ bei Temperaturen von 15 bis 100° C, wobei man vorteilhafterweise bei Temperaturen von 15 bis 80° C arbeitet. Im Falle der Verwendung des wasserfeuchten Preßkuchens von (II) wird man die Umsetzung zunächst bei Temperaturen von 15 bis 80° C durchführen und dann die Suspension auf Temperaturen zwischen 100 und 150, vorzugsweise 105 bis 130° C erwärmen, wobei das über den Preßkuchen eingebrachte Wasser zusammen mit einem Teil des Lösungsmittels abdestilliert.

In den folgenden Beispielen beziehen sich Angaben über Teile und Prozente, sofern nicht anders vermerkt, auf das Gewicht.

## Beispiel 1

In eine Lösung von 76 Teilen 2,4-Diiminothiazolidinhydrochlorid in 3000 Teilen Wasser gibt man eine Lösung von 103,5 Teilen der Additionsverbindung aus 1,3-Diiminoisoindolin und Äthylenglykol in 600 Teilen Methanol. Unter Überleiten eines leichten Stickstoffstromes rührt man 14 Stunden bei 20 bis 25° C, saugt ab und wäscht mit warmem Wasser. Das so erhaltene 1-Imino-3-(2′,4′-diimino-5′-thiazolidinyliden)-isoindolin (Formel II, Z= >NH) wird als ca. 20%iger Preßkuchen abgefüllt und in dieser Form für die weiteren Reaktionen eingesetzt.

## Beispiel 2

75 Teile 2,4-Diiminothiazolidin-hydrochlorid werden in 2000 Teilen Wasser gelöst. Man trägt 105 Teile der festen Additionsverbindung aus 1,3-Diiminoisoindolin und Äthylenglykol ein und rührt über Nacht bei Raumtemperatur. Man saugt ab, wäscht gründlich mit Wasser nach und trocknet. Die Ausbeute an 1-Imino-3-(2′,4′-diimino-5′-thiazolidinyliden)-isoindolin (Formel II, Z = >NH) beträgt 100 Teile.

## Beispiel 3

In eine Mischung aus 3000 Teilen Wasser und 70 Teilen konz. Ammoniaklösung trägt man unter Überleiten eines leichten Stickstoffstromes 271 Teile 2,4-Diiminothiazolidin-benzolsulfonat ein. Dann läßt man eine Lösung von 145 Teilen 1,3-Diiminoisoindolin in 650 Teilen Methanol einlaufen, rührt 14 Stunden bei Raumtemperatur nach, saugt ab, wäscht neutral und trocknet. Die Ausbeute an 1-Imino-3-(2′,4′-diimino-5′-thiazolidinyliden)-isoindolin beträgt 230 Teile.

## Beispiel 4

12,2 Teile 1-Imino-3-(2′,4′-diimino-5′-thiazolidinyliden)-isoindolin in Form eines ca. 20%igen wäßrigen Preßkuchens, hergestellt nach den Angaben des Beispiels 1, werden in 500 Teilen Dimethylformamid mit 65 Teilen Nickelchlorid $NiCl_2 \cdot 6\,H_2O$ 14 Stunden bei Raumtemperatur gerührt. Dann erwärmt man die rote Suspension auf 110 bis 120°C, wobei das eingeschleppte Wasser zusammen mit Dimethylformamid abdestilliert. Man hält 3 Stunden bei dieser Temperatur, suagt den Feststoff aus der noch warmen Reaktionsmischung ab, wäscht mit Dimethylformamid, dann mit Methanol und trocknet. Man erhält 13 Teile eines farbstarken, blaustichig roten Pigments der Formel I mit $R = R^1 = R^2 = R^3 = H$, $Z = NH$, $Me = Ni$ und $A^{\ominus} = Cl^{\ominus}$.

## Beispiel 5

In 1000 Teilen Dimethylformamid werden 49 Teile trockenes, fein gemahlenes 1-Imino-3-(2′,4′-diimino-5′-thiazolidinyliden)-isoindolin, das nach Beispiel 3 hergestellt wurde, und 24 Teilen Nickelchloridhexahydrat 14 Stunden bei 20 bis 25°C gerührt. Dann erwärmt man auf 110 bis 115°C, hält 3 Stunden bei dieser Temperatur, saugt ab und wäscht mit Dimethylformamid und Methanol bis zum farblosen Ablauf. Nach Trocknen und Mahlen erhält man 52 Teile eines kornweichen, farbstarken Reststoffes der Formel (I) mit $R = R^1 = R^2 = R^3 = H$, $Z = NH$, $Me = Ni$ und $A^{\ominus} = Cl^{\ominus}$, der im Lackaufstrich etwas blauer ist als das nach Beispiel 4 erhaltene Pigment.

## Beispiel 6

Arbeitet man nach den Angaben des Beispiels 4, verwendet jedoch als Lösungsmittel anstelle des Dimethylformamids 500 Teile N-Methylpyrrolidon, so erhält man einen Pigmentfarbstoff mit vergleichbaren Eigenschaften.

## Beispiel 7

Verfährt man nach den Angaben des Beispiels 5, arbeitet aber mit 600 Teilen Dimethylacetamid als Lösungsmittel, so isoliert man 12 Teile eines farbstarken Rotpigments, dessen coloristische Eigenschaften mit denen des Beispiels 5 weitgehend übereinstimmen.

## Beispiel 8

Man arbeitet nach den Angaben des Beispiels 4, setzt als Lösungsmittel aber 600 Teile Dimethylsulfoxid ein. Das erhaltene Pigment entspricht in seiner Koloristik dem des Beispiels 4.

## Beispiel 9

Man arbeitet nach den Angaben des Beispiels 5, setzt als Lösungsmittel statt Dimethylformamid aber 500 Teile Hexamethylphosphorsäuretriamid ein. Das so hergestellte Pigment der Formel (I)

($R = R^1 = R^2 = R^3 = H$, Me = Ni, Z = NH, $A^{\ominus} = Cl^{\ominus}$) ist etwas blauer und geringfügig farbschwächer als das in Dimethylformamid erhaltene Produkt.

Beispiel 10

11,4 Teile 2-Oxo-4-imino-thiazolidin werden mit 15 Teilen 1,3-Diimino-isoindolin in 300 Teilen Wasser 40 Stunden bei ca. 25°C unter Überleiten eines leichten Stickstoffstromes gerührt. Dann saugt man ab, wäscht mit Wasser und erhält 22 Teile 1-Imino-3-(2'-oxo-4'-imino-thiazolidinyliden)-isoindolin (Formel II, $Z = \geq O$), dessen spektroskopische Eigenschaften mit denen des in Methanol erhaltenen Produktes übereinstimmen.

Beispiel 11

In 500 Teilen Dimethylformamid werden 12,2 Teile 1-Imino-3-(2'-oxo-4'-iminothiazolidinyliden)-isoindolin, das nach Beispiel 10 hergestellt wurde, und 6,5 Teile Nickelchloridhexahydrat 3 Stunden bei Raumtemperatur gerührt. Man heizt dann innerhalb von 3 Stunden in Stufen auf 100°C, hält eine Stunde bei dieser Temperatur und saugt ab. Nach Waschen mit Dimethylformamid und Methanol erhält man 7 Teile eines farbstarken, stark blaustichig roten Pigmentfarbstoffes der Formel (I) mit $R = R^1 = R^2 = R^3 = H$, Me = Ni, Z = O und $A^{\ominus} = Cl^{\ominus}$.

Beispiel 12

12,2 Teile 1-Imino-3-(2',4'-diimino-5'-thiazolidinyliden)-isoindolin in Form eines etwa 20%igen wäßrigen Preßkuchens werden in 500 Teilen Dimethylformamid mit 7,5 Teilen Nickelnitrat $Ni(NO_3)_2 \cdot 6\,H_2O$ 14 Stunden bei Raumtemperatur gerührt.

Dann erwärmt man innerhalb von 2 Stunden auf 120°C, wobei das eingeschleppte Wasser mit einem Teil des Lösungsmittels abdestilliert. Nach 3stündigem Halten bei 120 bis 125°C saugt man ab, wäscht mit Dimethylformamid und dann mit Methanol bis zum farblosen Ablauf. Nach Mahlen und Trocknen erhält man 13 Teile eines farbstarken Rotpigments der Formel (I) mit $R = R^1 = R^2 = R^3 = H$, Me = Ni, Z = NH und $A^{\ominus} = NO_3^{\ominus}$, das im Lack etwas gelber als das nach Beispiel 4 erhaltene Produkt ist.

Beispiel 13

Man arbeitet nach den Angaben des Beispiels 12, setzt jedoch als Metallsalz 7,5 Teile Nickelsulfat $NiSO_4 \cdot 3\,H_2O$ statt des Nitrats ein. Das erhaltene Pigment der Formel (I) mit $R = R^1 = R^2 = R^3 = H$, Me = Ni, Z = NH und $A^{\ominus} = 1/2\ SO_4^{2-}$ entspricht in seinen coloristischen Eigenschaften dem Produkt des Beispiels 12.

Beispiel 14

Die Angaben des Beispiels 12 werden eingehalten, als Nickelsalz wird aber die äquimolare Menge Nickelacetat $Ni(OAc)_2 \cdot 4\,H_2O$ eingesetzt. Man erhält 11 Teile eines Farbstoffes der Formel (I) mit $R = R^1 = R^2 = R^3 = H$, Me = Ni, Z = NH und $A^{\ominus} = CH_3CO_2^{\ominus}$, der im Lackaufstrich besonders blaustichige Rotfärbungen liefert.

Beispiel 15

Man arbeitet nach den Angaben des Beispiels 5, setzt aber 22 Teile wasserfreies Nickelbromid $NiBr_2$ statt des Chlorids ein. Man erhält in einer Ausbeute von 54 Teilen einen Farbstoff der Formel (I) mit $R = R^1 = R^2 = R^3 = H$, Z = NH, Me = Ni und $A^{\ominus} = Br^{\ominus}$, dessen Koloristik der des Pigments aus Beispiel 5 fast genau entspricht.

Beispiel 16

Man verfährt nach den Angaben des Beispiels 4, setzt als Metallsalz aber wasserfreies Nickelrhodanid $Ni(SCN)_2$ ein. Man erhält in guter Ausbeute einen brillanten, blaustichig roten Farbstoff der Formel (I) mit $R = R^1 = R^2 = R^3 = H$, Me = Ni, Z = NH und $A^{\ominus} = SCN^{\ominus}$.

### Beispiel 17

12,2 Teile wasserfreies, fein gemahlenes 1-Imino-3-(2',4'-diimino-5'-thiazolidinyliden)-isoindolin, hergestellt nach Beispiel 2, werden mit 4,5 Teilen Kupferchlorid $CuCl_2 \cdot 2\,H_2O$ in 100 Teilen Dimethylformamid 4 Stunden bei 100°C gerührt. Man läßt dann erkalten, saugt ab, wäscht mit Dimethylformamid, dann Methanol und trocknet. Man erhält 12 Teile eines stark blaustichig roten Pigmentfarbstoffes der Formel (I) mit $R = R^1 = R^2 = R^3 = H$, Me = Cu, Z = NH und $A^{\ominus} = Cl^{\ominus}$.

### Beispiel 18

Ersetzt man das Kupferchlorid des Beispiels 17 durch die äquimolare Menge an Kupferacetat $Cu(O_2CCH_3)_2 \cdot H_2O$ und verfährt im übrigen nach den Angaben des Beispiels 17, so erhält man in gleicher Ausbeute einen blaustichig roten Farbstoff der Formel (I) mit $R = R^1 = R^2 = R^3 = H$, Me = Cu, Z = NH und $A^{\ominus} = CH_3CO_2^{\ominus}$.

### Beispiel 19

Ersetzt man das Kupferchlorid des Beispiels 17 durch die äquimolare Menge an Kupfersulfat $CuSO_4 \cdot 5\,H_2O$ und verfährt im übrigen wie dort beschrieben, so isoliert man 12 Teile eines rotbraunen Farbstoffes der Formel (I) mit $R = R^1 = R^2 = R^3 = H$, Me = Cu, Z = NH und $A^{\ominus} = 1/2\ SO_4$.

### Beispiel 20

Man arbeitet nach den Angaben des Beispiels 17, setzt als Metallsalz aber 3 Teile Kobaltchlorid $CoCl_2 \cdot 6\,H_2O$ ein. Man erhält 12 Teile eines braunen Pigmentfarbstoffes der Formel (I) mit $R = R^1 = R^2 = R^3 = H$, Me = Co, Z = NH und $A^{\ominus} = Cl^{\ominus}$.

**Patentansprüche**

1. Verfahren zur Herstellung von unlöslichen Metallkomplexfarbstoffen der allgemeinen Formel

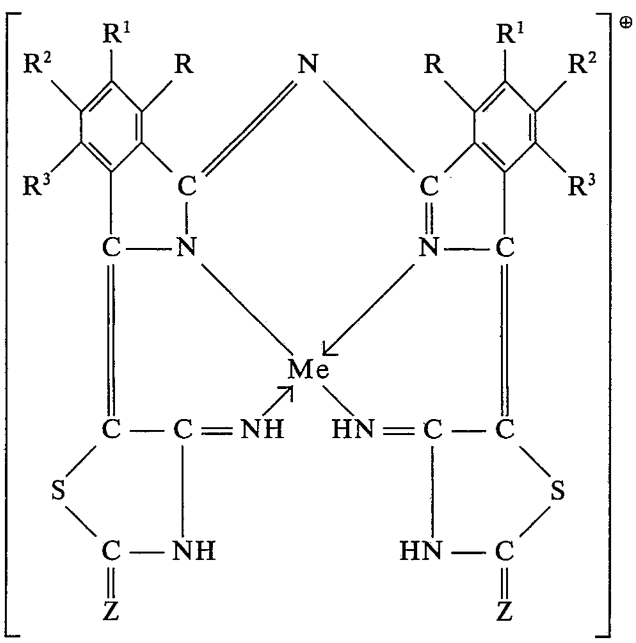

$A^{\ominus}$ (I)

worin

R, $R^1$, $R^2$ und $R^3$ gleich oder verschieden sein können und Wasserstoff, $C_1$- bis $C_4$-Alkyl, $C_1$- bis $C_4$-Alkoxy, Chlor, Brom, Trifluormethyl oder Phenyl,
Me ein Kupfer-, Kobalt- oder vorzugsweise Nickelatom,
Z = NH, = O oder = S und
A ein Äquivalent eines Anions bedeuten,

durch Kondensation von entsprechenden 1,3-Diiminoisoindolinen und Thiazolidinderivaten in protischen Lösungsmitteln und Einwirken von Metallsalzen $MeA_2$ auf das Kondensationsprodukt in Lösungsmitteln, dadurch gekennzeichnet, daß man die Kondensation des Diiminoisoindolins mit einem Salz eines Thiazolidins in Wasser, gegebenenfalls in Gegenwart von basisch wirkenden Verbindungen durchführt, das 1 : 1 Kondensationsprodukt isoliert und auf das Kondensationsprodukt in aprotisch polaren, mit Wasser mischbaren Lösungsmitteln Metallsalze $MeA_2$ einwirken läßt und das Umsetzungsprodukt isoliert.

2. Verfahren gemäß Anspruch 1, dadurch gekennzeichnet, daß man das 1 : 1 Kondensationsprodukt in Form des wäßrigen Preßkuchens mit dem Metallsalz $MeA_2$ umsetzt.

3. Verfahren gemäß Anspruch 2, dadurch gekennzeichnet, daß man während der Umsetzung das mit dem Preßkuchen eingebrachte Wasser mit einem Teil des verwendeten Lösungsmittels abdestilliert.

4. Verfahren gemäß Anspruch 2, dadurch gekennzeichnet, daß man die Umsetzung des 1 : 1 Kondensationsproduktes mit dem Metallsalz $MeA_2$ zunächst bei Temperaturen von 15 bis 80°C durchführt und dann die Suspension auf Temperaturen zwischen 100 und 150°C erwärmt.

## Claims

1. A process for the preparation of insoluble metal complex colorants of the general formula

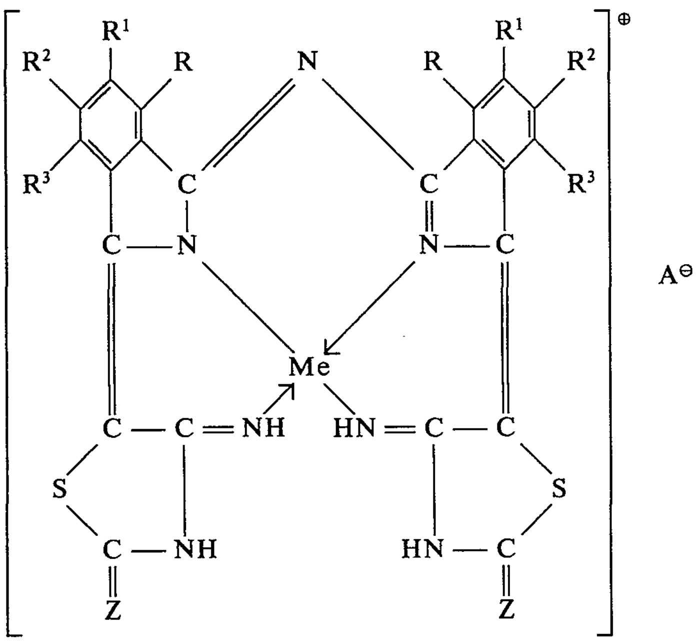

(I)

where

R, $R^1$, $R^2$ and $R^3$ may be identical or different and each is hydrogen, $C_1-C_4$-alkyl, $C_1-C_4$-alkoxy, chlorine, bromine, trifluoromethyl or phenyl,
Me is copper, cobalt or preferably nickel,
Z is NH, O or S and
A is one equivalent of an anion,

by condensation of the corresponding 1,3-diiminoisoindoline and thiazolidine derivative in an aprotic solvent, and action of a metal salt $MeA_2$ on the condensation product in a solvent, wherein the condensation of the diiminoisoindoline with a salt of a thiazolidine is carried out in water in the presence of absence of a basic agent, the 1 : 1 condensation product is isolated, a metal salt of the formula $MeA_2$ is allowed to act on the condensation product in an aprotic polar water-miscible solvent, and the reaction product is isolated.

2. A process as claimed in claim 1, wherein the 1 : 1 condensation product, in the form of an aqueous press cake, is reacted with the metal salt $MeA_2$.

3. A process as claimed in claim 2, wherein, during the reaction, the water introduced with the press cake is distilled off together with part of the solvent used.

4. A process as claimed in claim 2, wherein the reaction of the 1 : 1 condensation product with the metal salt $MeA_2$ is first carried out at from 15 to 80°C and the suspension is then heated at from 100 to 150°C.

**Revendications**

1. Procédé pour la préparation de colorants complexes métalliques insolubles de formule générale

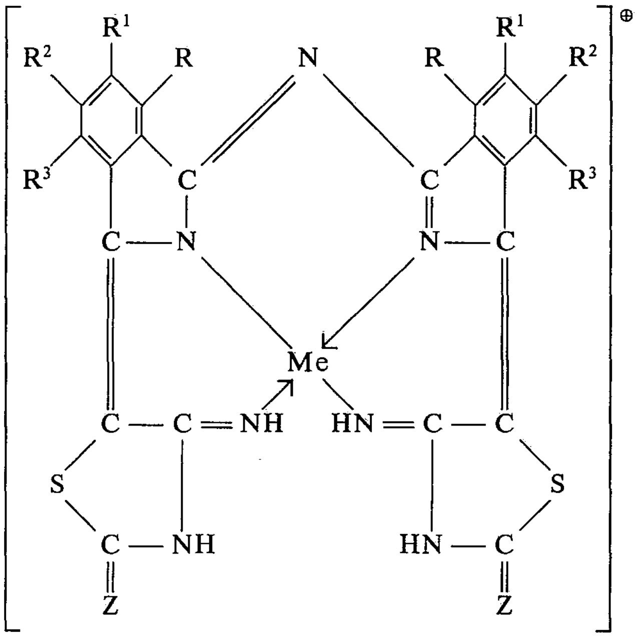

$A^{\ominus}$ (I)

dans laquelle

R, $R^1$, $R^2$ et $R^3$ peuvent être semblables ou différents et représentent chacun un hydrogène, un alcoyle en $C_1$ à $C_4$, un alcoxy en $C_1$ à $C_4$, un chlore, un brome, un trifluorométhyle ou un phényle,
Me représente un atome de cuivre, de cobalt ou, de préférence, de nickel,
Z =NH, =O ou =S et
A représente un équivalent d'un anion,

par condensation de 1,3-diimino-isoindolines et de dérivés de la thiazolidine correspondants dans des solvants protiques, et par action de sels métalliques $MeA_2$ sur le produit de condensation dans des solvants, caractérisé en ce qu'on mène la condensation de la diimino-isoindoline avec un sel d'une thiazolidine dans l'eau, de cas échéant en présence de composés à activité basique, on isole le produit de condensation 1 : 1, on fait agir des sels métalliques $MeA_2$ sur le produit de condensation dans des solvants miscibles avec l'eau, aprotiquement polaires, et on isole le produit de la réaction.

2. Procédé selon la revendication 1, caractérisé en ce qu'on fait réagir le produit de condensation 1 : 1 sous forme du tourteau aqueux avec le sel métallique $MeA_2$.

3. Procédé selon la revendication 2, caractérisé en ce qu'au cours de la réaction, on élimine par distillation l'eau introduite avec le tourteau, en même temps qu'une partie du solvant utilisé.

4. Procédé selon la revendication 2, caractérisé en ce qu'on mène la réaction du produit de condensation 1 : 1 avec le sel métallique $MeA_2$, tout d'abord à une température comprise entre 15 et 80° C, puis on chauffe la suspension à une température comprise entre 100 et 150° C.